# EUROPEAN PATENT APPLICATION

(11) **EP 4 851 771 A1**
(43) Date of publication of application: **09.12.2026**
(21) Application number: 25747978.2
(22) Date of filing: 26.01.2025
(51) Int. Cl.: G06F 3/04845

(54) **MEDIA EDITING METHOD AND APPARATUS, DEVICE, AND STORAGE MEDIUM**

(30) Priority: 04.02.2024 CN 202410160401
(71) Applicant: Beijing Zitiao Network Technology Co., Ltd., Beijing 100190 (CN)
(72) Inventor: LIU, Danying, Beijing 100028 (CN); LI, Wenhao, Beijing 100028 (CN); HE, Qianbin, Beijing 100028 (CN)
(74) Representative: Marks & Clerk LLP
(86) International application number: PCT/CN2025/075350
(87) International publication number: WO 2025/162414

(57) **Abstract**

Embodiments of the disclosure relate to a method, an apparatus, a device, and a storage medium for media editing. The method proposed herein includes: presenting an editing interface of a first media, the editing interface including an image expansion entry; presenting an image expansion interface based on a selection of the image expansion entry, the image expansion interface including a canvas area and a setting area, the canvas area displaying the first media, and the setting area being configured to acquire at least one control parameter for expanding the first media; changing, based on a first touch operation for an expansion ratio adjustment control in the setting area, a first size of the first media in the canvas area according to an expansion ratio indicated by the first touch operation; displaying, based on the determined first size of the first media in the canvas area, at least one candidate media generated based on the expansion ratio in an area of the image expansion interface; and displaying a second media in the editing interface based on a selection of the second media from the at least one candidate media.

## Description

The present application claims priority to Chinese Patent Application No. 202410160401.7, filed on February 4, 2024, and entitled "METHOD, APPARATUS, DEVICE AND STORAGE MEDIUM FOR MEDIA EDITING", the content of which is incorporated herein by reference in its entirety.

### FIELD

Example embodiments of the present disclosure generally relate to the field of computers, and in particular, to a method, an apparatus, a device, and a computer-readable storage medium for media editing.

### BACKGROUND

With the development of computer technologies, people can acquire various media content through the Internet pathway, and may also create media content through various media shooting or editing tools. However, in some cases, there may be instances where the proportion and size of the media content shot or acquired by users do not meet expectations. Conventional media editing tools are difficult to help users implement extensions to such media content.

### SUMMARY

In a first aspect of the present disclosure, a method for media editing is provided. The method includes: presenting an editing interface of a first media, the editing interface including an image expansion entry; presenting an image expansion interface based on a selection of the image expansion entry, the image expansion interface including a canvas area and a setting area, the canvas area displaying the first media, and the setting area being configured to acquire at least one control parameter for expanding the first media; changing, based on a first touch operation for an expansion ratio adjustment control in the setting area, a first size of the first media in the canvas area according to an expansion ratio indicated by the first touch operation; displaying, based on the determined first size of the first media in the canvas area, at least one candidate media generated based on the expansion ratio in an area of the image expansion interface; and displaying a second media in the editing interface based on a selection of the second media from the at least one candidate media.

In a second aspect of the present disclosure, an apparatus for media editing is provided. The apparatus includes: a first presentation module configured to present an editing interface of a first media, the editing interface including an image expansion entry; a second presentation module configured to present an image expansion interface based on a selection of the image expansion entry, the image expansion interface including a canvas area and a setting area, the canvas area displaying the first media, and the setting area being configured to acquire at least one control parameter for expanding the first media; a parameter adjustment module configured to change, based on a first touch operation for an expansion ratio adjustment control in the setting area, a first size of the first media in the canvas area according to an expansion ratio indicated by a first touch operation; a media display module configured to display, based on the determined first size of the first media in the canvas area, at least one candidate media generated based on the expansion ratio in an area of the image expansion interface; and a media replacement module configured to display a second media in the editing interface based on a selection of the second media from the at least one candidate media.

In a third aspect of the present disclosure, an electronic device is provided. The device includes at least one processing unit; and at least one memory coupled to the at least one processing unit and storing instructions for execution by the at least one processing unit, the instructions, when executed by the at least one processing unit, causing the device to perform the method of the first aspect.

In a fourth aspect of the present disclosure, a computer-readable storage medium is provided. The computer-readable storage medium stores a computer program executable by a processor to implement the method of the first aspect.

In a fifth aspect of the present disclosure, a computer program product is provided. The computer program product includes computer-executable instructions, and the computer-executable instructions, when executed by a processor, implement the method of the first aspect.

It should be understood that the content described in this Summary section is neither intended to identify key or essential features of the embodiments of the present disclosure, nor is it intended to limit the scope of the present disclosure. Other features of the present disclosure will be readily envisaged through the following description.

### BRIEF DESCRIPTION OF THE DRAWINGS

The above and other features, advantages, and aspects of embodiments of the present disclosure will become more apparent in conjunction with the drawings and with reference to the following detailed description. In the drawings, the same or similar reference numerals refer to the same or similar elements, where:
FIG. 1 illustrates a schematic diagram of an example environment in which the embodiments according to the present disclosure may be implemented;
FIG. 2 illustrates a flowchart of an example process of media editing according to some embodiments of the present disclosure;
FIGS. 3A to 3F illustrate example interfaces according to some embodiments of the present disclosure;
FIG. 4 illustrates a schematic structural block diagram of an example apparatus for media editing according to some embodiments of the present disclosure; and
FIG. 5 illustrates a block diagram of an electronic device capable of implementing a plurality of embodiments of the present disclosure.

### DETAILED DESCRIPTION OF EMBODIMENTS

The embodiments of the present disclosure will be described in more detail below with reference to the drawings. Although some embodiments of the present disclosure are shown in the drawings, it should be understood that the present disclosure may be implemented in various forms, and should not be interpreted as limited to the embodiments set forth herein. On the contrary, these embodiments are provided for a more thorough and complete understanding of the present disclosure. It should be understood that the drawings and embodiments of the present disclosure are only for illustrative purposes, and are not intended to limit the protection scope of the present disclosure.

It should be noted that the titles of any section/subsection provided herein are not restrictive. Various embodiments are described throughout this document, and any type of embodiment may be included under any section/subsection. In addition, embodiments described in any section/subsection may be combined in any way with any other embodiments described in the same section/subsection and/or different sections/subsections.

In the description of the embodiments of the present disclosure, the term "include/comprise" and similar terms should be understood to be open-ended, that is, "include/comprise but not limited to". The term "based on" should be understood as "at least partially based on". The term "one embodiment" or "the embodiment" should be understood as "at least one embodiment". The term "some embodiments" should be understood as "at least some embodiments". Other explicit and implicit definitions may also be included below. The terms "first", "second", and the like may refer to different or same objects. Other explicit and implicit definitions may also be included below.

The embodiments of the present disclosure may involve user's data, data acquisition and/or use, and the like. These aspects all follow the corresponding laws, regulations and related provisions. In the embodiments of the present disclosure, all data collection, acquisition, processing, machining, forwarding, use, and the like are carried out on the premise that the user knows and confirms. Accordingly, when implementing the embodiments of the present disclosure, the user should be informed of the type, use range, use scenarios, and the like of possible involved data or information in an appropriate manner according to relevant laws and regulations, and the user's authorization should be obtained. The specific form of notice and/or authorization may be changed according to actual situations and application scenarios, and the scope of the present disclosure is not limited in this regard.

If the solutions in this specification and embodiments involve personal information processing, the solutions in this specification and embodiments will all be processed on the premise that they have a legal basis (e,g., the consent of the personal information subject is obtained, or necessary to perform a contract, etc.), and will only be processed within the scope of provisions or agreements. A user refuses to process personal information other than necessary information required for basic functions, will not affect the user's use of the basic functions.

As mentioned above, in some cases, there may be instances where the ratio and size of the media content shot or acquired by users do not meet expectations. Conventional media editing tools are difficult to help users expand such media content, which results in relatively low quality of some media content and it is difficult to meet users' use requirements or sharing requirements.

The embodiments of the present disclosure provide a solution for media editing. According to the solution, an editing interface of a first media is presented, the editing interface including an image expansion entry. An image expansion interface is presented based on a selection of the image expansion entry, the image expansion interface including a canvas area and a setting area, the canvas area displaying the first media, and the setting area being configured to acquire at least one control parameter for expanding the first media. A first size of the first media in the canvas area is changed according to an expansion ratio indicated by a first touch operation based on the first touch operation for an expansion ratio adjustment control in the setting area. Based on the determined first size of the first media in the canvas area, at least one candidate media generated based on the expansion ratio is displayed in an area of the image expansion interface. And a second media is displayed in the editing interface based on a selection of the second media from the at least one candidate media.

In this way, the embodiments of the present disclosure can support users to conveniently adjust the expansion ratio for expanding the media through the touch operation on the expansion ratio adjustment control, thereby supporting the convenient expansion of the media.

In addition, through such a media expansion process, the embodiments of the present disclosure can expand new media based on the content of existing media, thereby obtaining new media with richer content. Furthermore, the embodiments of the present disclosure can also provide users with fine control capabilities in the interaction process of media expansion, for example, in a small screen scenario such as a smart terminal. This can improve the efficiency of media editing and user experience.

Various example implementations of the solution are described in detail below in further conjunction with the drawings.

### Example Environment

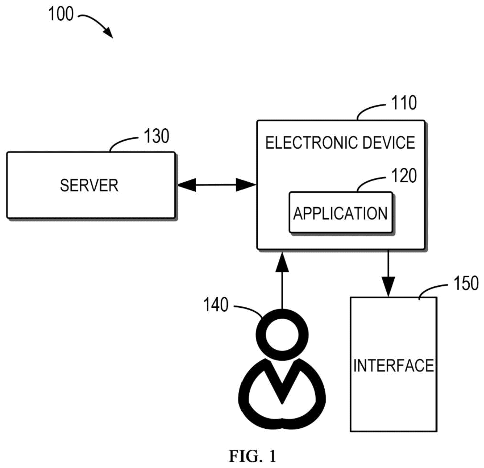

FIG. 1 illustrates a schematic diagram of an example environment 100 in which the embodiments of the present disclosure may be implemented. As shown in FIG. 1, the example environment 100 may include an electronic device 110.

In the example environment 100, an application 120 supporting interface interaction may be run in the electronic device 110. The application 120 may be any appropriate type of application for interface interaction, examples of which may include but are not limited to: an image editing application, a video editing application, or other appropriate applications that provide image editing capabilities. A user 140 may interact with the application 120 via the electronic device 110 and/or its attached device.

In the environment 100 of FIG. 1, if the application 120 is active, the electronic device 110 may present an interface 150 for supporting interface interaction through the application 120.

In some embodiments, the electronic device 110 communicates with a server 130 to implement the provision of services for the application 120. The electronic device 110 may be any type of mobile terminal, fixed terminal or portable terminal, including a mobile phone, a desktop computer, a laptop computer, a notebook computer, a netbook computer, a tablet computer, a media computer, a multimedia tablet, a handheld computer, a portable game terminal, a VR/AR device, a personal communication system (PCS) device, a personal navigation device, a personal digital assistant (PDA), an audio/video player, a digital camera/video camera, a positioning device, a television receiver, a radio broadcast receiver, an e-book device, a game device, or any combination of the foregoing, including the accessories and peripherals of these devices or any combination thereof. In some embodiments, the electronic device 110 may also support any type of user-specific interface (such as "wearable" circuitry, etc.).

The server 130 may be an independent physical server, it may also be a server cluster or distributed system composed of a plurality of physical servers, or it may a cloud server that provides basic cloud computing services such as cloud services, cloud databases, cloud computing, cloud functions, cloud storage, network services, cloud communications, middleware services, domain name services, security services, content delivery networks, and big data and artificial intelligence platforms, and the like. The server 130 may include, for example, a computing system/server, such as a mainframe, an edge computing node, a computing device in a cloud environment, and the like. The server 130 may provide background services for the application 120 supporting virtual scenes in the electronic device 110.

A communication connection may be established between the server 130 and the electronic device 110. The communication connection may be established by wired or wireless ways. The communication connection may include, but is not limited to, a Bluetooth connection, a mobile network connection, a universal serial bus (USB) connection, a wireless fidelity (WiFi) connection, and the like, and the embodiments of the present disclosure are not limited in this regard. In the embodiments of the present disclosure, the server 130 and the electronic device 110 may implement signaling interaction through the communication connection between the server 130 and the electronic device 110.

It should be understood that the structure and function of each element in the environment 100 are described only for the purpose of illustration, without suggesting any limitation on the scope of the present disclosure.

Some example embodiments of the present disclosure will be described below with continued reference to the drawings.

### Example Process

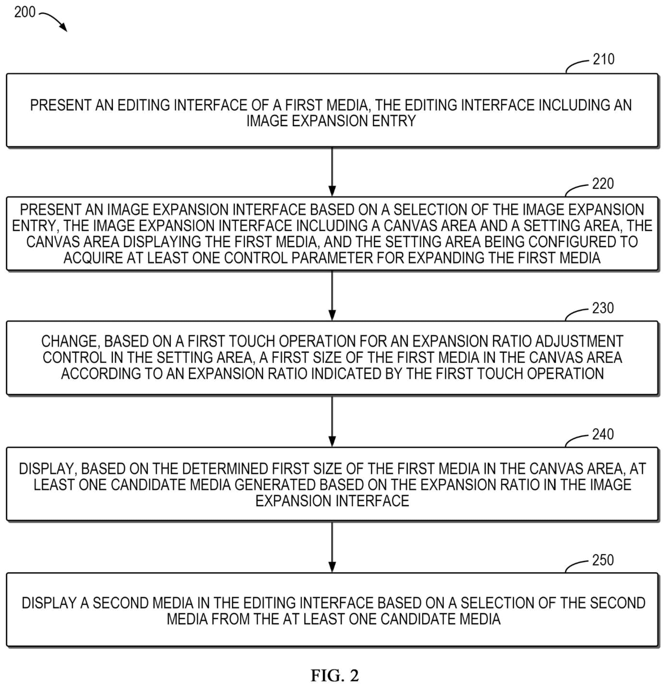

FIG. 2 illustrates a flowchart of an example interaction process 200 according to some embodiments of the present disclosure. The process 200 may be implemented at the electronic device 110. The process 200 is described below with reference to FIG. 1.

At block 210, the electronic device 110 presents an editing interface of a first media, the editing interface including an image expansion entry.

An example process of the present disclosure will be described below by taking an image as an example of the media. It should be understood that such media may include any appropriate type of media with image information, such as videos, expressions, models, etc.

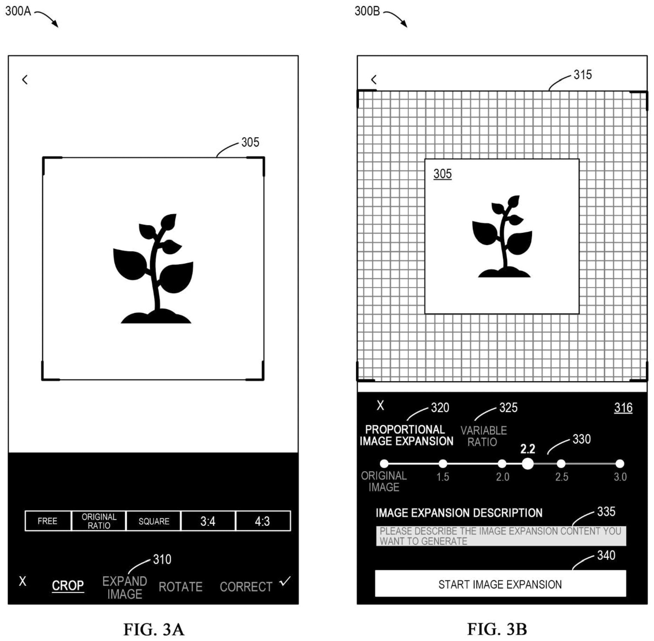

The process 200 will be described below with reference to FIGS. 3A to 3F. As shown in FIG. 3A, the electronic device 110 may present an editing interface 300A of a first image 305. In the editing interface 300A, the electronic device 110 may provide one or more functions (e.g., cropping, image expansion, rotation, correction, etc.) for editing the first image 305.

In some embodiments, as shown in FIG. 3A, the electronic device 110 may provide an image expansion entry 310 for expanding the first image 305 in the editing interface 300A.

In some embodiments, the image expansion entry 310 may also be presented in the editing interface 300A at other appropriate positions or based on other appropriate logic, for example, and the present disclosure is not intended to limit the specific display position of the image expansion entry 310.

At block 220, the electronic device 110 presents an image expansion interface based on a selection of the image expansion entry, the image expansion interface including a canvas area and a setting area, the canvas area displaying the first media, and the setting area being configured to acquire at least one control parameter for expanding the first media.

For example, after receiving the selection of the expansion entry 310 in FIG. 3A, the electronic device 110 may present an image expansion interface 300B as shown in FIG. 3B.

As shown in FIG. 3B, the image expansion interface 300B may include a canvas area 315 and a setting area 316. The canvas area 315 may be used to display the first image 305 to be expanded. The setting area 316 may acquire one or more control parameters for expanding the first image 305.

In some embodiments, the setting area 316 may, for example, have a preset size, and the size of the canvas area 315 may be determined based on the size of the setting area 316, the overall size of the image expansion interface 300B, and the aspect ratio of the first image 305 to be expanded.

For example, in a proportional image expansion mode, the aspect ratio of the size of the canvas area 315 matches the aspect ratio of the first image 305. In addition, the canvas area 315 does not overlap with the setting area 316, so as to ensure that the user may better adjust the position or size of the first image 305 in the canvas area 315.

In some embodiments, when entering the expansion interface 300B, the electronic device 110 may hide the first image layer corresponding to the first image 305 in the editing interface 300A. In addition, the electronic device 110 may also construct a group of layers corresponding to the canvas area 315. Specifically, the group of layers may include a background layer and a second image layer, where the background layer has a preset transparency (e.g., is completely transparent), and the second image layer corresponds to the first image 305.

As an example, an area that is not covered by the first image 305 in the canvas area 315 may correspond to an area of the background layer, which for example, may present a preset pattern.

By constructing a new layer during image expansion, the embodiments of the present disclosure may improve the efficiency of image expansion and replacement.

Continuing to refer to FIG. 2, at block 230, the electronic device 110 changes a first size of the first media in the canvas area according to an expansion ratio indicated by a first touch operation based on the first touch operation for an expansion ratio adjustment control in the setting area.

Specifically, as shown in FIG. 3A, the electronic device 110 may support, for example, a proportional image expansion mode 320 and a variable ratio mode 325, where the proportional image expansion mode 320 indicates that an image expansion result of the first image 305 matches the aspect ratio of the first image 305, and the variable ratio mode 325 indicates to expand the first image 305 according to a specified aspect ratio.

For example, in the proportional image expansion mode 320, the electronic device 110 may provide an expansion ratio adjustment control 330 in the setting area 316. As shown in FIG. 3A, the expansion ratio adjustment control 330 may be a sliding bar control, which may change the position of the slider based on the user's touch operation on the expansion ratio adjustment control 330, thereby determining the expansion ratio of the first image 305.

Taking FIG. 3B as an example, the electronic device 110 may determine that the expansion ratio of the first image 305 is 2.2 times based on the user's touch operation on the expansion ratio adjustment control 330.

In some embodiments, the electronic device 110 may also change the size of the first image 305 in the canvas area 315 accordingly based on the expansion ratio, so that the changed size of the first image 305 and the size of the canvas area 315 may meet the expansion ratio.

In order to further improve the interaction efficiency for the user to adjust the expansion ratio, in some embodiments, the ratio adjustment control may also modify the expansion ratio based on a second touch operation for the first image 305 in the canvas area 315, where the second touch operation is used to zoom in and out the first image 305 in the canvas area 315. Specifically, the electronic device 110 may also receive a touch operation of the user on the first image 305 in the canvas area 315, and zoom in and out the first image 305 accordingly based on the touch operation.

While the first image 305 is being scaled based on the touch operation, the electronic device 110 may also update the expansion ratio indicated in the expansion ratio adjustment control 330 in a linked manner. For example, when the first image 305 is zoomed in based on the touch operation, the expansion ratio indicated by the expansion ratio adjustment control 330 may be reduced accordingly. It should be understood that the expansion ratio may be determined based on a ratio of the size of the canvas area to an adjusted size of the first image 305.

In some embodiments, if the touch operation on the first image 305 triggers the expansion ratio to be modified to reach a threshold (e.g., the lower limit or the upper limit) indicated by the expansion ratio adjustment control 330, the first image 305 in the canvas area 315 is no longer zoomed in or out in response to the touch operation or an additional touch operation.

As an example, when the first image 305 is zoomed out based on the touch operation and the expansion ratio reaches 3.0 times, the electronic device 110 will no longer further zoom out the first image 305 in response to the touch operation or additional touch operation.

In some cases, the first image 305 may not be zoomed in or out from the center of the canvas area 315, which results in that at least one edge of the first image 305 may overlap with the edge of the canvas area 315 during a zoom-in-or-out process based on the touch operation. In this case, the electronic device 110 will no longer continue to zoom in the first image 305 in response to the touch operation, the additional touch operation, or the touch operation on the expansion ratio adjustment control, so as to ensure that the first image 305 is completely displayed in the canvas area 315.

In this way, the embodiments of the present disclosure can support the user to quickly adjust the expansion ratio through a touch manner to a control or to an image, thereby improving the efficiency of image editing.

In some embodiments, the electronic device 110 may also support the user to change the position of the first image 305 in the canvas area 315. For example, the electronic device 110 may adjust the position of the first image 305 based on the user's touch operation (e.g., a drag-and-drop operation) on the first image 305.

In some embodiments, the image expansion result to be described below may be generated based on the position of the first image 305, so that the first image 305 remains in the corresponding position of the image expansion result.

Continuing to refer to FIG. 2, at block 240, the electronic device 110 displays at least one candidate media generated based on the expansion ratio in an area of the image expansion interface based on the determined first size of the first media in the canvas area.

In some embodiments, for example, the electronic device 110 may, based on the selection of the control 340, trigger the generation of the image expansion result based on the expansion ratio determined in the expansion interface 300B.

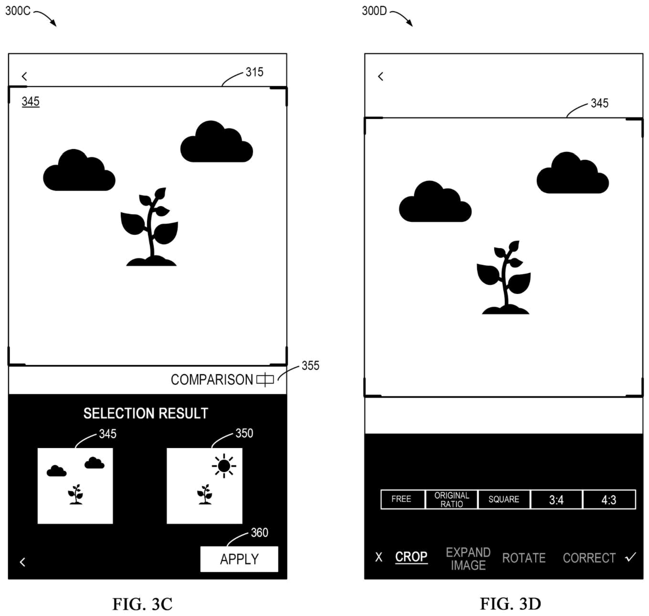

For example, as shown in FIG. 3C, the electronic device 110 may display candidate images generated based on the first image 305, such as a candidate image 345 and a candidate image 350. It should be understood that any appropriate media expansion technology may be used to generate the candidate media, and the present disclosure is not intended to limit the specific implementation process of media expansion.

In some embodiments, the electronic device 110 may provide a plurality of candidate images, and may display one of the plurality of candidate images, for example, the candidate image 345, in the canvas area 315. In addition, for example, the electronic device 110 may also receive the selection of the candidate image 350, and display the selected candidate image 350 in the canvas area 315.

In other examples, for example, the electronic device 110 may also provide only a single candidate image in the canvas area 315, instead of providing the plurality of candidate images as shown in FIG. 3C.

In still some examples, for example, the electronic device 110 may also acquire and present more candidate images based on user operations. For example, when receiving the user's swipe operation for a selection result, the electronic device 110 may, for example, present more candidate images. In some embodiments, these more candidate images may include, for example, a historical image expansion result of the first image 305.

In some embodiments, in order to facilitate the user to compare the first image 305 with the candidate image 345, the electronic device 110 may also provide a comparison control 355, and may switch the canvas area 315 to display the first image 305 based on the selection of the comparison control 355.

As an example, the canvas area 315 may display the first image 305 when the comparison control 355 is in a triggered state, and display the candidate image 345 when the comparison control 355 is not in the triggered state.

In some embodiments, when the candidate image 345 is in a selected state, the electronic device 110 may also update the second image layer as mentioned above based on the selected candidate image 345, so that the second image layer may correspond to the candidate image 345.

Continuing to refer to FIG. 2, at block 250, the electronic device 110 displays a second media in the editing interface based on a selection of the second media from the at least one candidate image.

Continuing with the example of FIG. 3C, when the candidate image 345 is in the selected state, the electronic device 110 may receive the selection of an application control 360, and may accordingly present the editing interface 300D as shown in FIG. 3D. As shown in FIG. 3D, in the editing interface 300D, the electronic device 110 may display the selected second image (that is, the candidate image 345). As an example, the electronic device 110 may use the second image (that is, the candidate image 345) to replace the original first image 305, thereby completing an image expansion editing process of the first image 305.

In some embodiments, in order to improve the efficiency of image replacement, the electronic device 110 may use the second image layer corresponding to the candidate image 345 to replace the first image layer corresponding to the first image 305 in the editing interface, thereby achieving image replacement more efficiently.

Based on the process described above, the embodiments of the present disclosure can support the user to conveniently adjust the expansion ratio for image expansion through the touch operation on the expansion ratio adjustment control and/or the touch operation on the image in the canvas area, thereby improving the efficiency of image editing and improving the user experience during editing.

In some embodiments, the electronic device 110 may also support the user to input text description information to guide the generation of an expansion result. Specifically, as shown in FIG. 3B, in the setting area 316, the electronic device 110 may also provide an input control 335 for acquiring text description information. It should be understood that such text description information may be, for example, optional input or necessary input.

In some embodiments, the electronic device 110 may receive the user's input in the input control 335 to determine the text description information for guiding image expansion. As an example, such text description information may be used, for example, to describe the image content of an expansion part, an image style of the expansion part, and the like.

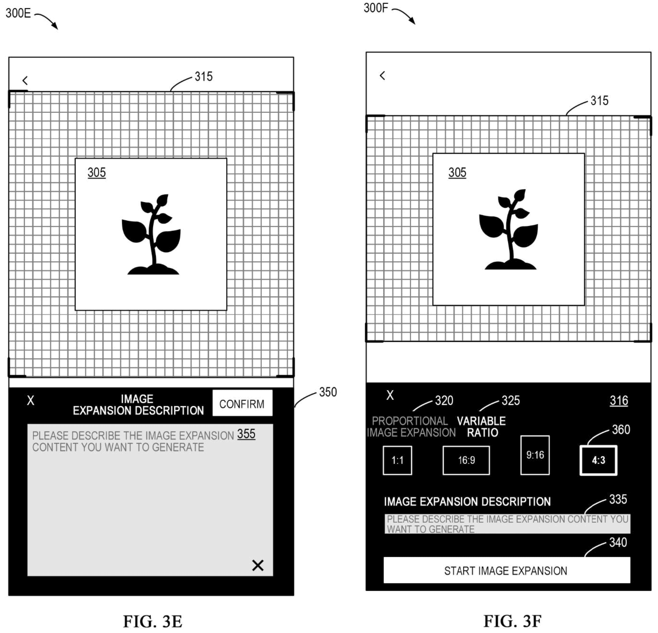

In scenarios such as mobile devices, the size of the display device is usually limited, which results in a limited size of the input control. In some embodiments, as shown in FIG. 3E, the electronic device 110 may also stop displaying the setting area 316 and display an input panel 350 as shown in FIG. 3E in response to the input control 335 being triggered.

As shown in FIG. 3E, the input panel 350 may provide an input area 355 that is larger in size, thereby improving the efficiency of acquiring text description information. In addition, the electronic device 110 may also clear text content input in the input area 355 based on the selection of a clear control in the input area 355.

In some embodiments, after receiving the text description information via the input panel 350, the electronic device 110 may switch to display the setting area 316 as shown in FIG. 3B, and may display at least part of the content of the received text description information in the input control 335 of the setting area 316.

For example, the electronic device 110 may display a predetermined number of lines of content based on the size of the input control 335. In the case that the text description information exceeds the predetermined number of lines, the electronic device 110 may omit the subsequent content. Furthermore, the electronic device 110 may use the input panel 350 to present the complete text description information based on the triggering of the input control 335.

In some embodiments, taking FIG. 3C as an example, before the user selects a specific candidate image and applies it, the electronic device 110 may also receive a user's request for resetting at least one control parameter (e.g., click a return button), and may stop displaying the candidate image 345 and the candidate image 350, and switch to display the image expansion interface 300B shown in FIG. 3B.

In some embodiments, each control in the image expansion interface 300B may retain the parameter information for generating the candidate image 345 and the candidate image 350. For example, the input control 310 may retain and display the previously received text description information.

Therefore, the embodiments of the present disclosure may facilitate the user to further optimize the text description information, thereby improving the efficiency of image editing.

Continuing to refer to FIG. 3F, as discussed above, the electronic device 110 may also support the variable ratio mode 325. Specifically, in the case that the variable ratio mode 325 is selected, the electronic device 110 may provide an aspect ratio adjustment control in the setting area 316. As an example, the aspect ratio adjustment control may include options corresponding to a plurality of preset aspect ratios, such as an option 360.

Furthermore, after receiving the selection of the option 360, the electronic device 110 may adjust the size of the canvas area 315 to make the size of the canvas area 315 match the selected aspect ratio (e.g., 4:3).

Similarly, after receiving the selection of the control 340, the electronic device 110 may provide one or more candidate images based on the indicated aspect ratio (e.g., 4:3). The one or more candidate images may have the indicated aspect ratio, and the first image 305 may remain in the corresponding position of the one or more candidate images.

In some embodiments, when the user switches the image expansion modes, the text description information in the input control 335 may be retained, for example. That is, if the user has already input specific text description information in the proportional image expansion mode 320, when the user switches to the variable ratio mode 325, the input control 335 may retain the input text description information, thereby avoiding repeated input by the user and improving the efficiency of image editing.

The above describes the media editing process according to the embodiments of the present disclosure in conjunction with an example of an image as the media. It should be understood that the interaction process described above may also be applied to other appropriate media such as videos, expressions, models, etc.

### Example Apparatus and Device

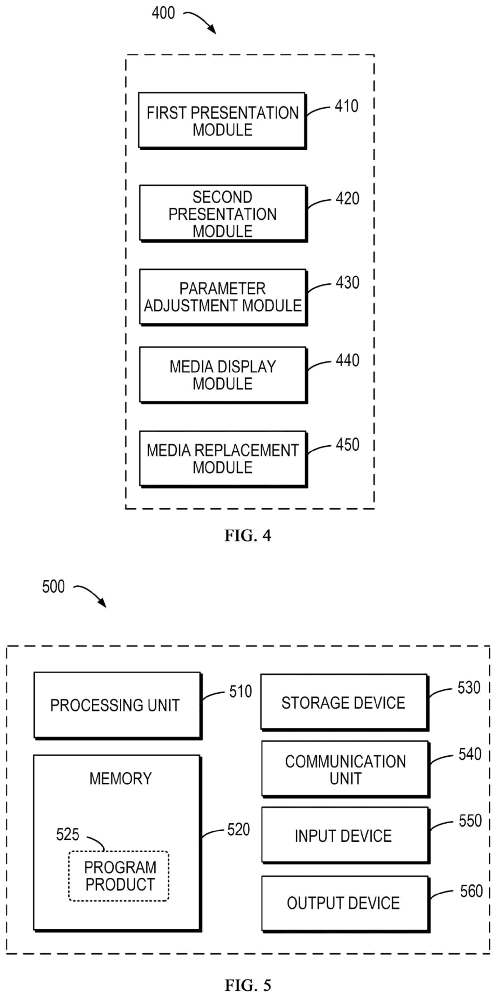

The embodiments of the present disclosure also provide corresponding apparatuses for implementing the above methods or processes. FIG. 4 illustrates a schematic structural block diagram of an example apparatus 400 for media editing according to some embodiments of the present disclosure. The apparatus 400 may be implemented as or included in the electronic device 110. Each module/component in the apparatus 400 may be implemented by hardware, software, firmware, or any combination thereof.

As shown in FIG. 4, the apparatus 400 includes a first presentation module 410 configured to present an editing interface of a first media, the editing interface including an image expansion entry; a second presentation module 420 configured to present an image expansion interface based on a selection of the image expansion entry, the image expansion interface including a canvas area and a setting area, the canvas area displaying the first media, and the setting area being configured to acquire at least one control parameter for expanding the first media; a parameter adjustment module 430 configured to change, based on a first touch operation for an expansion ratio adjustment control in the setting area, a first size of the first media in the canvas area according to an expansion ratio indicated by a first touch operation; a media display module 440 configured to display, based on the determined first size of the first media in the canvas area, at least one candidate media generated based on the expansion ratio in an area of the image expansion interface; and a media replacement module 450 configured to display a second media in the editing interface based on a selection of the second media from the at least one candidate media.

In some embodiments, the setting area further includes an input control for acquiring text description information, and the at least one candidate media is also generated based on the acquired text description information.

In some embodiments, the apparatus 400 further includes a text input module configured to: display the setting area in the editing interface in response to receiving a request for resetting the at least one control parameter, where the input control in the setting area retains and presents the text description information.

In some embodiments, the text input module is further configured to: stop displaying the setting area and display an input panel in response to the input control being triggered; and display the setting area and display at least part of the content of the text description information in the input control in response to receiving the text description information in the input panel.

In some embodiments, when the image expansion mode of the first media changes, the input control retains the acquired text description information, the image expansion mode including a first image expansion mode or a second image expansion mode, the first image expansion mode indicating that the image expansion result of the first media matches the aspect ratio of the first media, and the second image expansion mode indicating to expand the first media according to a specified aspect ratio.

In some embodiments, the expansion ratio adjustment control corresponds to a first image expansion mode, the first image expansion mode indicating that the image expansion result of the first media matches the aspect ratio of the first media; and the setting area further includes an aspect ratio adjustment control corresponding to a second image expansion mode, the aspect ratio adjustment control being used to determine the aspect ratio of the image expansion result of the first media, and the size of the canvas area being changing further based on the determined aspect ratio.

In some embodiments, the ratio adjustment control can modify the expansion ratio based on a second touch operation for the first media in the canvas area, the second touch operation being used to zoom in or out the first media in the canvas area.

In some embodiments, in response to the second touch operation triggering the expansion ratio to be modified to reach a threshold indicated by the expansion ratio adjustment control, the first media in the canvas area no longer zooms in or out in response to the second touch operation or an additional touch operation.

In some embodiments, in response to the second touch operation triggering at least one edge of the first media to overlap with an edge of the canvas area, the first media in the canvas area no longer zooms in response to the second touch operation, an additional touch operation, or a touch operation on the expansion ratio adjustment control.

In some embodiments, the canvas area is further configured to change the position of the first media in the canvas area based on a third touch operation, so that the at least one candidate media is generated further based on the position of the first media.

In some embodiments, the apparatus 400 further includes a media switching module configured to: present, in the canvas area, a third media from the at least one candidate media; and switch the canvas area to present the first media based on a triggering of a comparison control in the canvas area.

In some embodiments, the setting area has a preset second size, and a third size of the canvas area is determined based on the second size, a fourth size of the image expansion interface, and the aspect ratio of the first media, so that the third size of the canvas area matches the aspect ratio and the canvas area does not overlap with the setting area.

In some embodiments, the apparatus 400 further includes a layer processing module configured to: hide a first image layer corresponding to the first media in the editing interface and construct a group of layers corresponding to the canvas area based on the selection of the image expansion entry, the group of layers including a background layer and a second image layer, the background layer having a preset transparency, and the second image layer corresponding to the first media.

In some embodiments, the layer processing module is further configured to: update the second image layer based on the at least one candidate media in response to the canvas area being triggered to display the at least one candidate media.

In some embodiments, the layer processing module is further configured to: update the second image layer based on the second media and replace the first image layer with the second image layer based on the selection of the second media from the at least one candidate media.

FIG. 5 illustrates a block diagram of an electronic device 500 in which one or more embodiments of the present disclosure may be implemented. It should be understood that the electronic device 500 shown in FIG. 5 is only illustrative, and should not constitute any limitation on the function and scope of the embodiments described herein. The electronic device 500 shown in FIG. 5 may be used to implement the electronic device 110 of FIG. 1.

As shown in FIG. 5, the electronic device 500 is in the form of a general electronic device. The components of the electronic device 500 may include, but are not limited to, one or more processors or processing units 510, a memory 520, a storage device 530, one or more communication units 540, one or more input devices 550, and one or more output devices 560. The processing unit 510 may be an actual or virtual processor and may execute various processes based on programs stored in the memory 520. In a multi-processor system, a plurality of processing units execute computer executable instructions in parallel to improve the parallel processing capability of the electronic device 500.

The electronic device 500 typically includes multiple computer storage medium. Such medium may be any available medium that is accessible to the electronic device 500, including, but not limited to, volatile and non-volatile medium, removable and non-removable medium. The memory 520 may be a volatile memory (e.g., a register, cache, a random access memory (RAM)), a non-volatile memory (e.g., a read-only memory (ROM), an electrically erasable programmable read-only memory (EEPROM), a flash memory), or any combination thereof. The storage device 530 may be a removable or non-removable medium, and may include a machine-readable medium such as a flash drive, a disk, or any other medium, which may be used to store information and/or data and may be accessed within the electronic device 500.

The electronic device 500 may further include additional removable/non-removable, volatile/non-volatile memory medium. Although not shown in FIG. 5, a disk driver for reading from or writing to a removable, non-volatile disk (such as a "floppy disk"), and an optical disk driver for reading from or writing to a removable, non-volatile optical disk may be provided. In these cases, each driver may be connected to a bus (not shown) by one or more data medium interfaces. The memory 520 may include a computer program product 525, which has one or more program modules configured to perform various methods or actions of various embodiments of the present disclosure.

The communication unit 540 implements communication with other electronic devices through a communication medium. In addition, the functions of the components of the electronic device 500 may be implemented by a single computing cluster or multiple computing machines, which may communicate through communication connections. Therefore, the electronic device 500 may use a logical connection with one or more other servers, a network personal computer (PC) or another network node to operate in a networked environment.

The input device 550 may be one or more input devices, such as a mouse, a keyboard, a tracking ball, etc. The output device 560 may be one or more output devices, such as a display, a speaker, a printer, etc. The electronic device 500 may also communicate with one or more external devices (not shown) through the communication unit 540 as needed, the external devices such as a storage device, a display device, etc., communicate with one or more devices that enable the user to interact with the electronic device 500, or communicate with any devices (such as a network card, a modem, etc.) that enable the electronic device 500 to communicate with one or more other electronic devices. Such communication may be performed via input/output (I/O) interfaces (not shown).

According to an illustrative implementation of the present disclosure, a computer-readable storage medium is provided, which stores computer executable instructions, and the computer executable instructions are executed by a processor to implement the method described above. According to an illustrative implementation of the present disclosure, there is also provided a computer program product, the computer program product is tangibly stored on a non-transitory computer-readable medium and includes computer executable instructions, and the computer executable instructions are executed by a processor to implement the method described above.

Various aspects of the present disclosure are described herein with reference to the flowcharts and/or block diagrams of the method, apparatus, device and computer program product implemented according to the present disclosure. It should be understood that each block of the flowchart and/or block diagram, and combinations of blocks in the flowchart and/or block diagram, may be implemented by computer-readable program instructions.

These computer-readable program instructions may be provided to a processing unit of a general-purpose computer, a special-purpose computer, or other programmable data processing apparatus, thereby producing a machine, so that these instructions, when executed by the processing unit of the computer or other programmable data processing apparatus, produce an apparatus for implementing the functions/actions specified in one or more blocks of the flowchart and/or block diagram. These computer-readable program instructions may also be stored in a computer-readable storage medium, these instructions make the computer, the programmable data processing apparatus, and/or other devices work in a specific way, and thus, the computer-readable medium storing the instructions includes a manufactured product, which includes instructions for implementing various aspects of the functions/actions specified in one or more blocks of the flowchart and/or block diagram.

The computer-readable program instructions may be loaded onto a computer, other programmable data processing apparatus, or other device, so that a series of operation steps are performed on the computer, other programmable data processing apparatus, or other device, to produce a computer-implemented process, so that the instructions executed on the computer, other programmable data processing apparatus, or other device implement the functions/actions specified in one or more blocks of the flowchart and/or block diagram.

The flowcharts and block diagrams in the drawings show the possibly implemented architectures, functions and operations of the system, method and computer program product of multiple implementations according to the present disclosure. In this regard, each block in the flowchart or block diagram may represent a module, a program segment or part of instructions, and the module, the program segment or the part of instructions contain one or more executable instructions for implementing the specified logical functions. In some alternative implementations, the functions marked in the blocks may also occur in an order different from that marked in the drawings. For example, two consecutive blocks may actually be executed substantially in parallel, or they may sometimes be executed in the reverse order, depending on the functions involved. It should also be noted that each block in the block diagram and/or the flowchart, and the combination of the blocks in the block diagram and/or the flowchart, may be implemented by a dedicated hardware-based system that executes specified functions or actions, or may be implemented by a combination of dedicated hardware and computer instructions.

The implementations of the present disclosure have been described above, and the above description is illustrative, non-exhaustive, and not limited to the disclosed implementations. Many modifications and variations will be apparent to those of ordinary skill in the art without departing from the scope and spirit of the described implementations. The terminology used herein is chosen to best explain the principles, practical applications, or improvements to the technology in the market of each implementation, or to enable other ordinary skilled persons in the art to understand each implementation disclosed herein.

## Claims

1. A method for media editing, comprising:
presenting an editing interface of a first media, the editing interface comprising an image expansion entry;
presenting an image expansion interface based on a selection of the image expansion entry, the image expansion interface comprising a canvas area and a setting area, the canvas area displaying the first media, and the setting area being configured to acquire at least one control parameter for expanding the first media;
changing, based on a first touch operation for an expansion ratio adjustment control in the setting area, a first size of the first media in the canvas area according to an expansion ratio indicated by the first touch operation;
displaying, based on the determined first size of the first media in the canvas area, at least one candidate media generated based on the expansion ratio in an area of the image expansion interface; and
displaying a second media in the editing interface based on a selection of the second media from the at least one candidate media.

2. The method of claim 1, wherein the setting area further comprises an input control for acquiring text description information, and the at least one candidate media is generated further based on the acquired text description information.

3. The method of claim 2, before displaying the second media in the editing interface based on the selection of the second media from the at least one candidate media, further comprising:
stopping displaying the at least one candidate media and displaying the setting area in the editing interface in response to receiving a request for resetting the at least one control parameter, wherein the input control in the setting area retains and presents the text description information.

4. The method of claim 2, further comprising:
displaying an input panel in response to the input control being triggered; and
displaying the setting area and displaying at least part of content of the text description information in the input control in response to receiving the text description information in the input panel.

5. The method of claim 2, wherein when an image expansion mode of the first media changes, the input control retains the acquired text description information, the image expansion mode comprising a first image expansion mode or a second image expansion mode, the first image expansion mode indicating that an image expansion result of the first media matches an aspect ratio of the first media, and the second image expansion mode indicating to expand the first media according to a specified aspect ratio.

6. The method of claim 1, wherein the expansion ratio adjustment control corresponds to a first image expansion mode, the first image expansion mode indicating that an image expansion result of the first media matches an aspect ratio of the first media; and
the setting area further comprises an aspect ratio adjustment control corresponding to a second image expansion mode, the aspect ratio adjustment control being used to determine an aspect ratio of the image expansion result of the first media, and a size of the canvas area being changed further based on the determined aspect ratio.

7. The method of claim 1, wherein the ratio adjustment control is able to modify the expansion ratio based on a second touch operation for the first media in the canvas area, the second touch operation being used to zoom in or out the first media in the canvas area.

8. The method of claim 7, wherein in response to the second touch operation triggering the expansion ratio to be modified to reach a threshold indicated by the expansion ratio adjustment control, the first media in the canvas area no longer zooms in or out in response to the second touch operation or an additional touch operation.

9. The method of claim 7, wherein in response to the second touch operation triggering at least one edge of the first media to overlap with an edge of the canvas area, the first media in the canvas area no longer zooms in in response to the second touch operation, an additional touch operation, or a touch operation on the expansion ratio adjustment control.

10. The method of claim 1, wherein the canvas area is further configured to change a position of the first media in the canvas area based on a third touch operation, so that the at least one candidate media is generated further based on the position of the first media.

11. The method of claim 1, wherein the setting area has a preset second size, and a third size of the canvas area is determined based on the second size, a fourth size of the image expansion interface, and an aspect ratio of the first media, so that the third size of the canvas area matches the aspect ratio and the canvas area does not overlap with the setting area.

12. The method of claim 1, further comprising:
hiding a first image layer corresponding to the first media in the editing interface and constructing a group of layers corresponding to the canvas area based on the selection of the image expansion entry, the group of layers comprising a background layer and a second image layer, the background layer having a preset transparency, and the second image layer corresponding to the first media.

13. The method of claim 12, further comprising:
updating, in response to the canvas area being triggered to present the at least one candidate media, the second image layer based on the at least one candidate media.

14. The method of claim 12, further comprising:
updating, based on the selection of the second media from the at least one candidate media, the second image layer based on the second media and replacing the first image layer with the second image layer.

15. An apparatus for media editing, comprising:
a first presentation module configured to present an editing interface of a first media, the editing interface comprising an image expansion entry;
a second presentation module configured to present an image expansion interface based on a selection of the image expansion entry, the image expansion interface comprising a canvas area and a setting area, the canvas area displaying the first media, and the setting area being configured to acquire at least one control parameter for expanding the first media;
a parameter adjustment module configured to change, based on a first touch operation for an expansion ratio adjustment control in the setting area, a first size of the first media in the canvas area according to an expansion ratio indicated by the first touch operation;
a media display module configured to display, based on the determined first size of the first media in the canvas area, at least one candidate media generated based on the expansion ratio in an area of the image expansion interface; and
a media replacement module configured to display a second media in the editing interface based on a selection of the second media from the at least one candidate media.

16. An electronic device, comprising:
at least one processing unit; and
at least one memory coupled to the at least one processing unit and storing instructions for execution by the at least one processing unit, the instructions, when executed by the at least one processing unit, causing the electronic device to perform the method of any of claims 1 to 14.

17. A computer-readable storage medium having a computer program stored thereon, the computer program being executable by a processor to implement the method of any of claims 1 to 14.

18. A computer program product comprising computer-executable instructions, wherein the computer-executable instructions, when executed by a processor, implement the method of any of claims 1 to 14.
